# EUROPEAN PATENT SPECIFICATION

(11) **EP 1 557 403 B1**
(45) Date of publication and mention of the grant of the patent: **04.07.2012**
(21) Application number: 04001602.4
(22) Date of filing: 26.01.2004
(51) Int. Cl.: C05F 9/00, C05F 9/02

(54) **System and method for composting-free disposal of organic wastes**
System und Verfahren zur kompostierungsfreien Entsorgung der organischen Abfälle
Système et procédé pour l'élimination sans compostage des déchets

(43) Date of publication of application: 27.07.2005
(73) Proprietor: Yes-Sun Holdings Limited, Central, Hong Kong (CN)
(72) Inventor: Lee, Shing-Hong, Chung Shan District Taipei City (TW)
(74) Representative: 2K Patentanwälte Blasberg Kewitz & Reichel

(56) References cited:
- EP-A- 0 179 045
- EP-A- 1 110 461
- DE-A- 4 101 039
- DATABASE WPI Section Ch, Week 200379 Derwent Publications Ltd., London, GB; Class C04, AN 2003-851106 XP002283956 & TW 538 019 A (YES-SUN ENVIRONMENTAL BIOTECH CO LTD) 21 June 2003 (2003-06-21)

## Description

### BACKGROUND OF THE INVENTION

### 1. Field of the Invention

The present invention relates to a system for composting-free disposal of organic wastes and a method thereof, and more particularly, to a system and technology that recycles organic wastes into a composting-free organic fertilizer product with high efficiency, less processing space, environmentally safe , and improved hygiene, without generating odors or propagating diseases.

### 2. Background of the Invention

Environmental protection is a focal point for every country of the world especially in dealing with various types of organic wastes generated from different activities, such as industrial (e.g. from food processing manufacturers, restaurants, or leather manufacturers), agriculture organic wastes (e.g. from gardens, farms, or cattle farms), and domestic (e.g. household waste). Thoughtful and fast disposal of organic wastes is a necessity for an area with a high population density, as the natural resources arc limited.

Conventional methods for disposing of organic waste, such as landfill, incineration, or compost, are associated with various problems, e.g. processing space, building and operating cost, time consumption, or air and water pollution.

Of all the organic wastes, the percentage of household waste is the highest. Because household waste contains a lot of waste water with oil content, when mixed with solid wastes, it generates odors and water content that make the garbage difficult to recycle. Meanwhile, the waste water contains organic matters that propagate bacteria and diseases. If the water content is directly drained without any pretreatment, it pollutes rivers, waterways and ground water. It is well known that household waste is an excellent organic fertilizer source, and hence can be efficiently reused as it can extend the lifetime of a landfill area or an incinerator, save money, and reduce social disputes caused by garbage problems. Use of swill to feed livestock with organic waste causes sanitation problems. High-speed fermentation involves a high energy consumption and degree of rottenness. Therefore, developed countries try to carry out highly efficient composting techniques to recycle the organic waste into organic fertilizer. Although chemical fertilizer is more efficient than organic fertilizer and greatly increases crop yield, it also reduces the functionality of soil and destroys the ecological balance. As environmental consciousness has given rise to greater environmental protection, the organic manure and organic farming are becoming more popular.

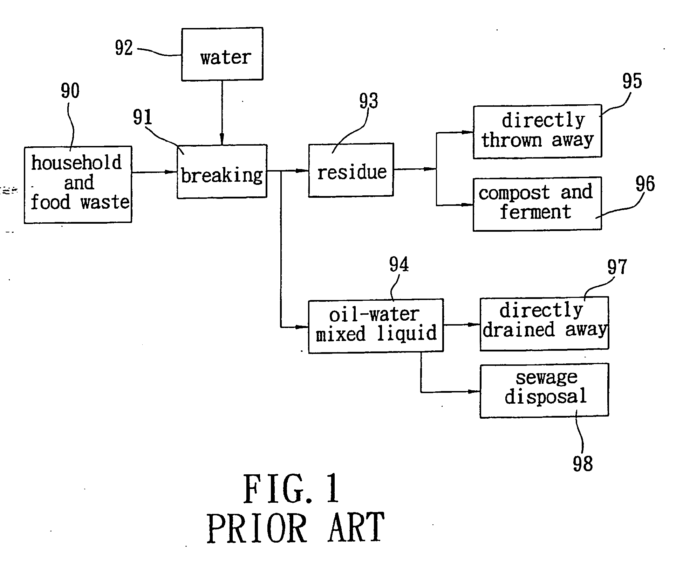

Fig. 1 illustrates a method for disposing of household waste. As illustrated, a household and food waste 90 is guided into a breaking apparatus to be broken into pieces 91, and water 92 is added to separate them into a residue 93 and an oil and water mixed liquid 94. The residue 93 is directly thrown away as 95 or sent to compost and ferment as 96, and the oil and water mixed liquid 94 is directly drained as 97 or directed to sewage disposal as 98.

According to the aforesaid method, a volume of the household waste can be reduced to 1/6 to 1/3 volume. However, a landfill area is needed for the residue. A high speed fermentation apparatus requires 48 to 72 hours to dry the residue and more than 15 days to reach a half-rotten form for organic matter. Subsequently when fertilizing, the residue generates a lot of toxins (e.g. methane, ammonia, and carbon monoxide) that pollute the environment. Also, chemical matters produced from the residue erode the high speed fermentation apparatus and thereby shortening its lifetime, increasing operating costs. The oil and water mixed liquid contains a lot of organic matter that propagate bacteria and diseases. If the oil and water mixed liquid is directly drained without any pretreatment, it pollutes the land and water systems.

Document TW 538019 discloses conveying waste into an oil-water washing device. That is, hot water is pured into the oil-water washing device letting the oil of the waste separate out. Then, the waste is shattered in the shattering device, and then the waste is milled in the milling device. Further, the waste is decomposed within the decomposition apparatus. The decomposition has a high pressure and temperature as well as a stirring device to stir the waste. Document EP 0179045 discloses to subject waste to a dewatering or a drying step. Document DE 4101039 discloses a milling device for milling the mixture and then conveying the mixture to another tank where enzymes are added. The mixture is composted. In this context, also document EP 1110461 should be mentioned. WO98/41646 A discloses a method for utilising vegetable biomass and a srew press for carrying out the same, comprising mechanical and biological steps.

Accordingly, as discussed above, the conventional method of disposing organic wastes still has some drawbacks that could be improved. The present technology/ invention aims to resolve the drawbacks in the prior art.

### SUMMARY OF INVENTION

The primary objective of the invention is therefore to specify a system for composting-free disposal of organic wastes and a method for the same, which recycles organic waste into a composting-free organic fertilizer product with high efficiency, less processing space, greater environmental protection, and improved sanitation, without generating odors or propagating diseases.

According to the invention, the objective is achieved by a system according to claim 1 for composting-free disposal of organic waste.

The objective is achieved by a method according to claim 5 for composting-free disposal of organic waste.

To provide a clear understanding of the invention, the following detailed description illustrates embodiments and examples of the invention. Examples of the more important features of the invention thus have been summarized rather broadly in order that the detailed description thereof that follows may be better understood, and in order that the contributions to the art may be appreciated. There are, of course, additional features of the invention that will be described hereinafter and which will form the subject of the claims appended hereto.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a schematic flowchart of a method for disposing of a household waste according to the prior art;
Fig. 2 is a schematic diagram of a system for composting-free disposal of organic waste;
Fig. 3 is a schematic flowchart of a method for composting-free disposal of organic waste;
Fig. 4 is a schematic diagram of a pretreatment apparatus according to the present invention;
Fig. 5 is a schematic flowchart of pretreatment steps according to the present invention;
Fig. 6 is a schematic diagram of a system for producing a liquid fertilized composting-free organic fertilizer product according to the present invention;
Fig. 7 is a schematic flowchart of a method for producing a liquid fertilized composting-free organic fertilizer product according to the present invention;
Fig. 8 is a schematic diagram of a system for producing a solid fertilized composting-free organic fertilizer product ; and
Fig. 9 is a schematic flowchart of a method for producing a solid fertilized composting-free organic fertilizer product according to the present invention.

### DETAILED DESCRIPTION OF THE EMBODIMENTS

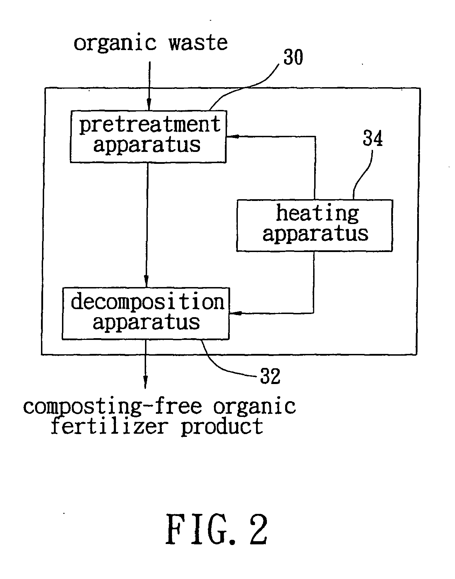

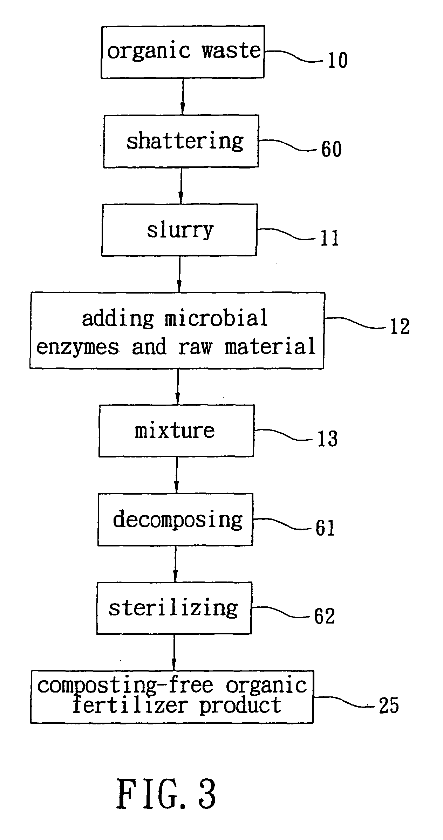

Fig. 2 and Fig. 3 depict a system for composting-free disposal of organic waste 10 and method for the same which are not according to the present invention. The system comprises of a heating apparatus 34, a pretreatment apparatus 30, and a decomposition apparatus 32.

The heating apparatus 34 is a circulatory airtight heating system with kerosene therein or a circulatory airtight heating system with vapor therein. The kerosene or the vapor is heated by using a boiler or electric power.

The organic waste 10 is guided into the pretreatment apparatus 30 to become a slurry 11.

The decomposition apparatus 32 is located downstream from the pretreatment apparatus 30. Microbial enzymes and raw material are added into the slurry 11 to make a mixture 13. The heating apparatus 34 heats the mixture 13. The decomposition apparatus 32 decomposes and sterilizes the mixture 13 to make a composting-free organic fertilizer product 25.

The system further includes an electrical circuit control unit (not shown). The heating apparatus 34, the pretreatment apparatus 30, and the decomposition apparatus 32 are electrically connected to the electrical circuit control unit, which is set up to control working requirements, such as temperature, time or velocity.

The method comprises:
(a) shattering 60 of the organic waste 10 to make a slurry 11;
(b) addition of microbial enzymes and raw material 12 into the slurry 11 to make a mixture 13; and
(c) decomposing 61 and sterilizing 62 of the mixture 13 to make a composting-free organic fertilizer product 25.

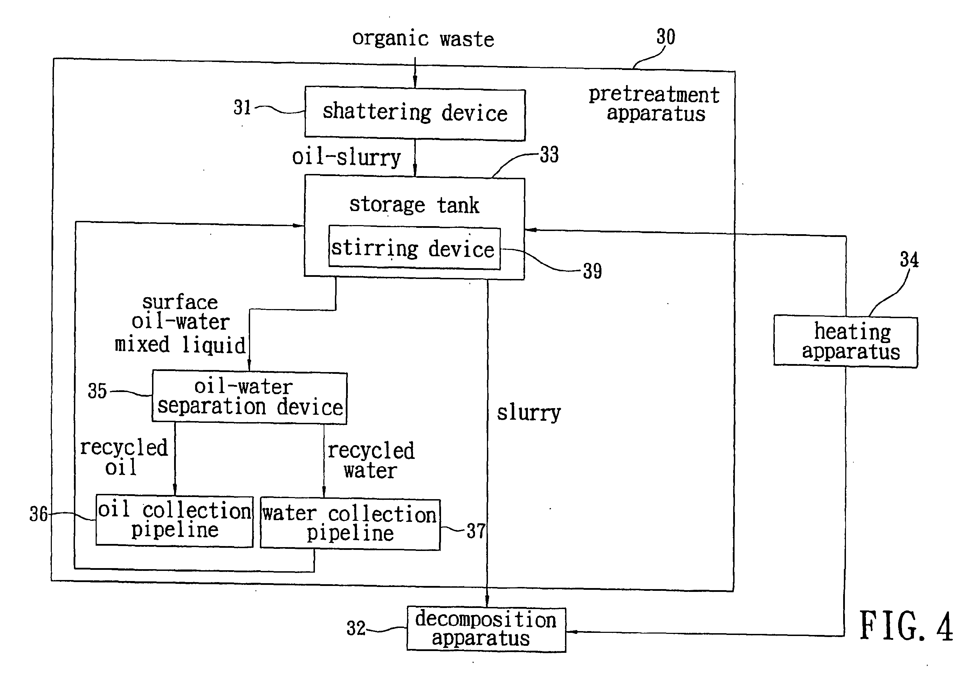

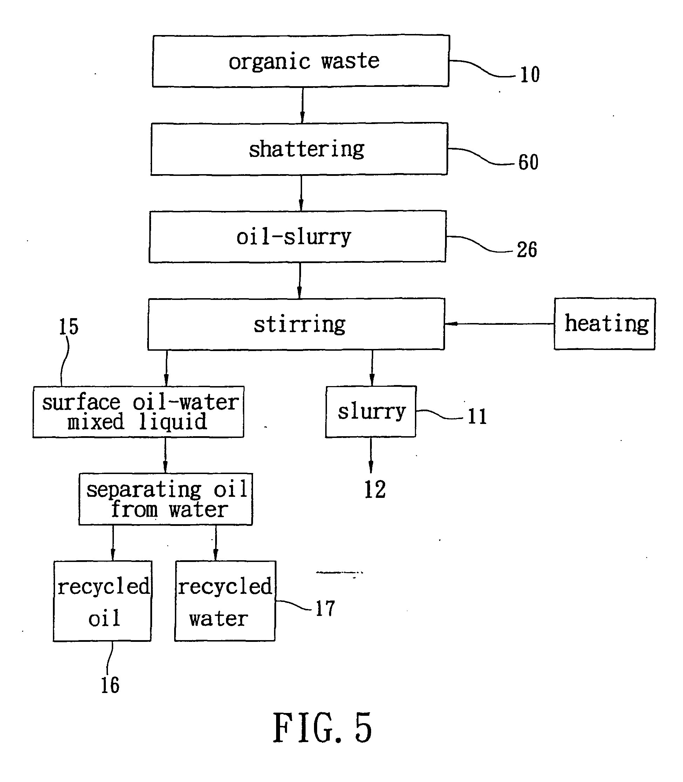

Reference is made to Fig. 4 and Fig. 5, which respectively are the schematic diagram of a pretreatment apparatus 30 and a schematic flowchart of pretreatment steps thereof according to the present invention. The pretreatment apparatus 30 includes a storage tank 33, a shattering device 31 and a oil-water separation device 35. The storage tank 33 is located downstream from the shattering device 31, and the oil-water separation device 35 is located downstream from the storage tank 33. The organic waste 10 is guided into the shattering device 31. The shattering device 31 shatters the organic waste 10 to make an oil-slurry 26 that is further guided into the storage tank 33. The heating apparatus 34 carries kerosene or vapor through a check valve, a safety valve and a pressure gauge to the inner wall of the storage tank 33 of the pretreatment apparatus 30 to heat the oil-slurry 26 in the storage tank 33 and to separate the oil-slurry 26 into a slurry 11 and a surface oil-water mixed liquid 15. The surface oil-water mixed liquid 15 is guided into the oil-water separation device 35 to separate the surface oil-water mixed liquid 15 into a recycled oil 16 and a recycled water 17 of the organic waste 10. The oil-water separation device 35 includes an oil collection pipeline 36 for recycling the further of recycled oil 16 and a water collection pipeline 37 for recycling the recycled water 17. The recycled oil 16 can be used to manufacture a cleaning soap. The water collection pipeline 37 connects to an upstream position of the storage tank 33 so that the recycled water 17 can be carried to the storage tank 33 for recycling.

The pretreatment apparatus 30 and pretreatment steps thereof can also include a pretreatment apparatus 30 including a storage tank 33, a shattering device 31 and a oil-water separation device 35. The storage tank 33 is placed upstream from both the shattering device 31 and the oil-water separation device 35. The organic waste 10 is guided into the storage tank 33. The heating apparatus 34 heats the organic waste 10 in the storage tank 33 of the pretreatment apparatus 30 to about 80°C to separate the organic waste 10 into water, a residue, and a surface oil-water mixed liquid 15. The storage tank 33 has a stirring device 39 to stir the organic waste 10 sufficiently therein, and the heating apparatus 34 helps the organic waste 10 to maintain a uniform working temperature. The water and the residue are further conveyed to the shattering device 31 to be shattered into a slurry 11. A diaphragmatic pump and a spiral conveying device are displaced between the storage tank 33 of the pretreatment apparatus 30 and the shattering device 31. The diaphragmatic pump conveys water to the shattering device 31. The spiral conveying device forces the residue into the shattering device 31. A rough-cut device can be disposed upstream from the storage tank 33 of the pretreatment apparatus 30 to cut organic waste 10 having a large size into small pieces.

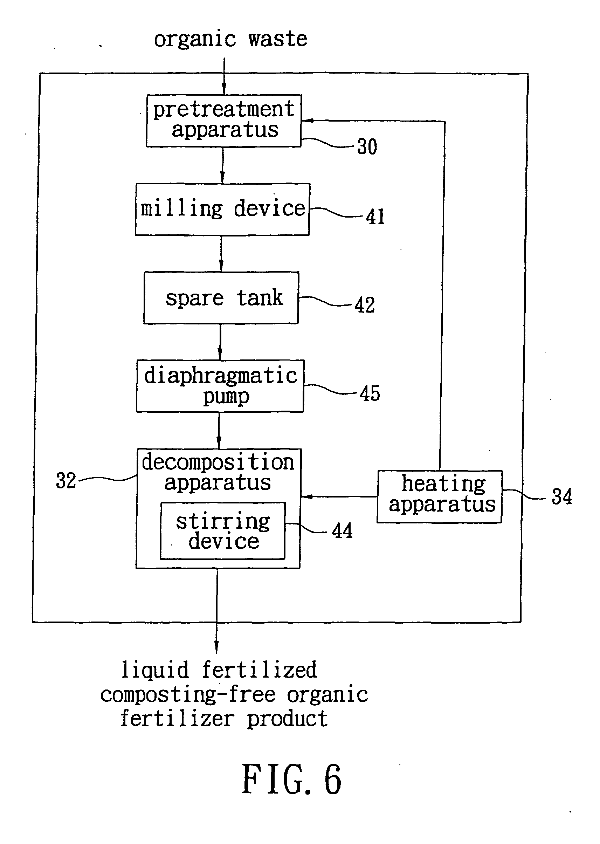

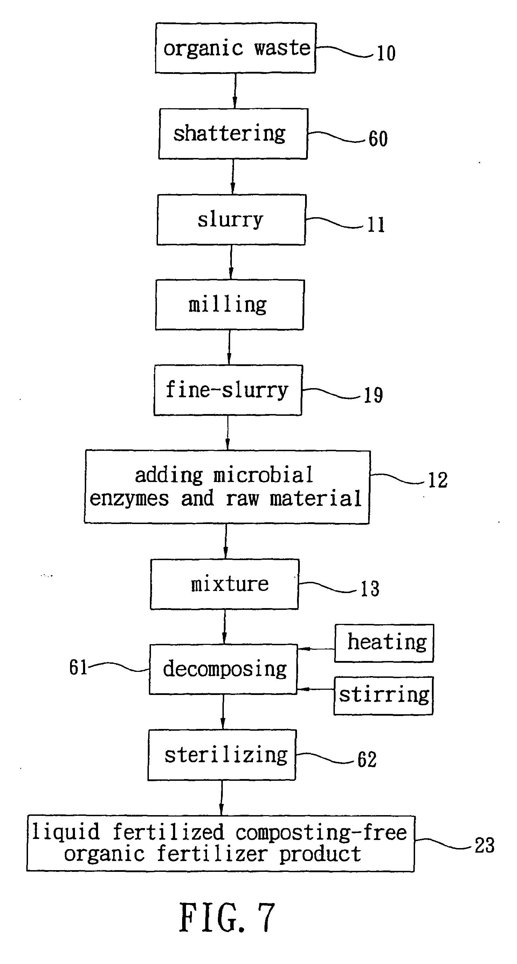

Reference made here is to Fig. 6 and Fig. 7, which show how to produce a liquid fertilized composting-free organic fertilizer product 23 according to the present invention. The system further comprises a milling device 41 and an open spare tank 42. The milling device 41 is disposed between the storage tank 33 of the pretreatment apparatus 30 and the decomposition apparatus 32, and the open spare tank 42 is disposed between the milling device 41 and the decomposition apparatus 32. The milling device 41 mills the slurry 11 into a fine-slurry 19 with a size less than 200 meshes per 6.45 squarecentimeters that is further conveyed into the spare tank 42. The microbial enzymes and raw material 12 are added into the spare tank 42 to be mixed with the fine-slurry 19 to become the mixture 13. Raw material, such as carbonized crops or by-gasses, is used to adjust a ratio between carbon and nitrogen of the fine-slurry 19 so as to maintain a suitable pH for the decomposition by the microbial enzymes. By changing the ratio of the composition of the raw material, different type of composting-free organic fertilizer product 25 can be obtained. The spare tank 42 has a diaphragmatic pump 45 to convey the mixture 13 into a decomposition tank of the decomposition apparatus 32. The decomposition apparatus 32 has a feed valve and a regulating valve to avoid a positive pressure developed in the decomposition tank when the diaphragmatic pump 45 operates. The heating apparatus 34 as already explained carries kerosene or vapor through a check valve, a safety valve and a pressure gauge to an inside of a wall of the decomposition apparatus 32 to heat the mixture 13 in the decomposition tank of the decomposition apparatus 32 with a temperature of over 100°C. The decomposition tank has a stirring device 44 to stir the mixture 13 sufficiently at a speed of about 6-15 rpm to help the mixture 13 to reach a uniform working temperature for decomposition. The decomposition tank is an airtight, high-pressure reaction tank. The mixture 13 is decomposed 61, which is then absorbed and purified for poisons, neutralized, and sterilized 62 in the decomposing tank. Thus the mixture 13 is decomposed to become a liquid, composting-free, organic fertilizer product 23. A packer and a sealer are further disposed downstream from the decomposition apparatus 32 in sequence to pack the liquid fertilized composting-free organic fertilizer product 23.

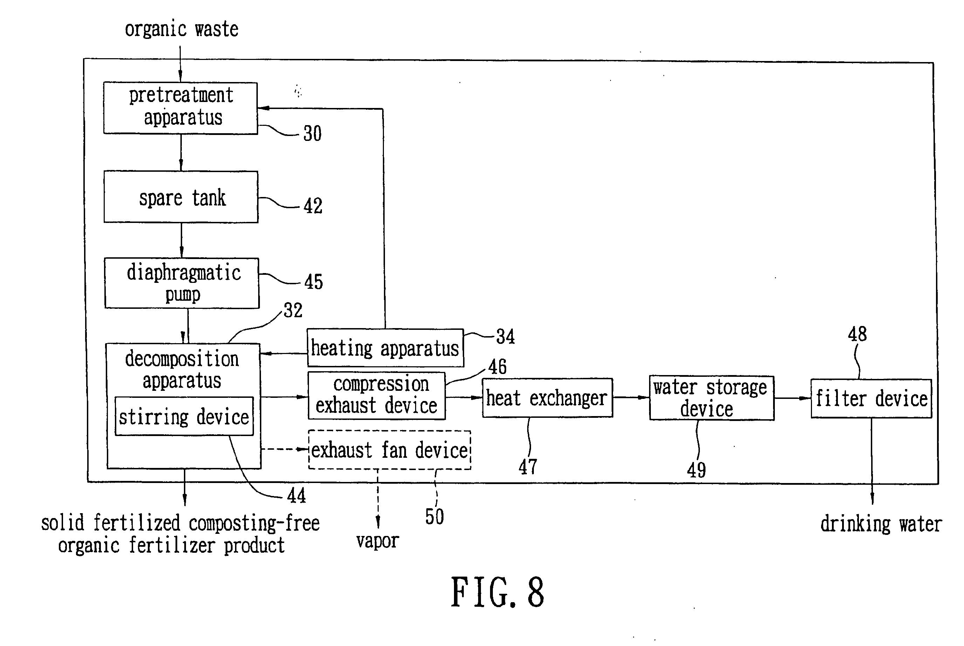

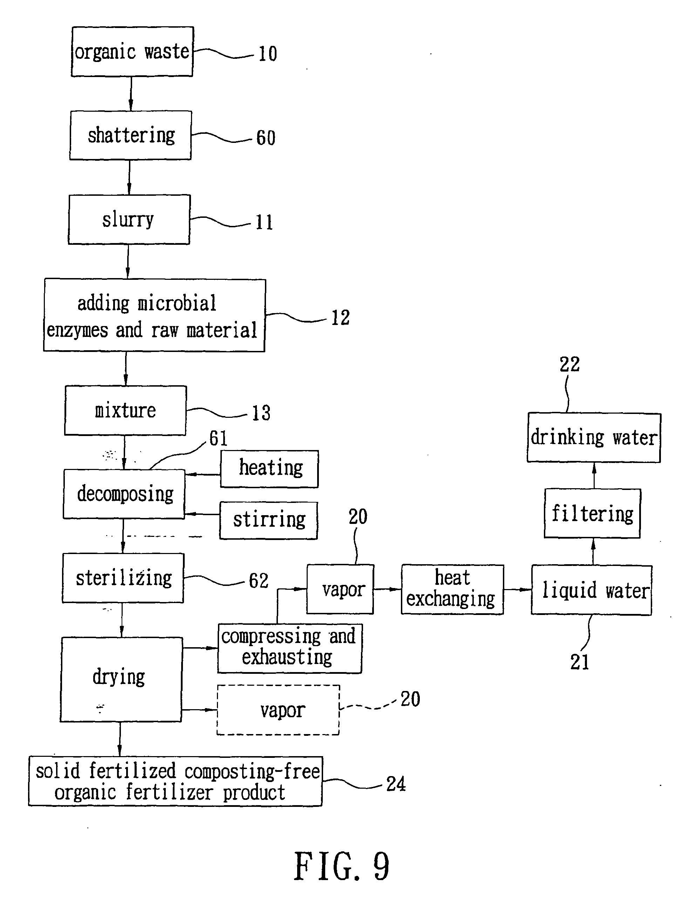

Reference is made here to Fig. 9, which show how to produce a solid fertilized composting-free organic fertilizer product 24 according to the present invention. Fig. 8 shows an example which is not according to the present invention. The system further comprises an open spare tank 42 disposed between the storage tank 33 of the pretreatment apparatus 30 and the decomposition apparatus 32. The storage tank 33 conveys the slurry 11 into the spare tank 42. The microbial enzymes and raw material 12 are added into the spare tank 42 to mix with the slurry 11 and form a mixture 13. Raw material, such as carbonized crops or by-gasses, is used to adjust a ratio between carbon and nitrogen of the slurry 11 so as to maintain a suitable pH⁻ for decomposition by the microbial enzymes. By changing the ratio of the composition of the raw material, different type of composting-free organic fertilizer product 25 can be obtained. The spare tank 42 has a diaphragmatic pump 45 to convey the mixture 13 into a decomposition tank of the decomposition apparatus 32. The decomposition apparatus 32 has a feed valve and a regulating valve to avoid a positive pressure generated in the decomposition tank when the diaphragmatic pump 45 operates. The mixture 13 can also be conveyed by a compressing and vacuum self-suction system. In other words, the decomposition apparatus 32 is held in a vacuum condition first, the spare tank 42 is sealed, and then the spare tank 42 is opened to communicate with the decomposition apparatus 32, whereby, the mixture 13 is sucked into the decomposition apparatus 32 automatically. The heating apparatus 34 carries kerosene or vapor through a check valve, a safety valve and a pressure gauge to an inside of a wall of the decomposition apparatus 32 to heat the mixture 13 in the decomposition tank of the decomposition apparatus 32 to a temperature over 100°C, to reach a working temperature. The decomposition tank has a stirring device 44 therein to stir sufficiently the mixture 13 therein at about 6-15 rpm to help the mixture 13 to reach the uniform working temperature for decomposition. The decomposition tank is a vacuum tank. The mixture 13 is decomposed, absorbed, purified for poisons, neutralized, and sterilized 62 in the decomposing tank. The system further includes a compression exhaust device 46, a heat exchanger 47, a water storage device 49, and a filter device 48. The compression exhaust device 46 connects to the decomposition tank of the decomposition apparatus 32. The heating apparatus 34 increases the temperature of the mixture 13 to about 150°C to accelerate the separation of water in the mixture 13. The compression exhaust device 46 draws out vapor 20 generated from the mixture 13 in a drying process. The heat exchanger 47 connects the compression exhaust device 46 to cool the vapor 20 into liquid water 21, which is further guided into the water storage device 49 connected with the heat exchanger 47. The filtering device 48 is connected to the water storage device 49 to filter the liquid water 21 to make safe drinking water 22. The mixture 13 is therefore decomposed and dried to into a solid, composting-free, organic fertilizer product 24. The decomposition tank can also be a general tank. Thus the system further including an exhaust fan device 50, and the decomposition apparatus 32 does not need the regulating valve. The exhaust fan device 50 connects to the decomposition tank to draw directly out the vapor 20 generated from the mixture 13 in the drying process. The mixture 13 is therefore decomposed and dried to become a solid fertilized composting-free organic fertilizer product 24.

As indicated above, the system for composting-free disposal of organic waste and method for the same of the present invention has the following advantages:
(1) The pretreatment apparatus separates the organic waste into the slurry and the surface oil-water mixed liquid to facilitate the disposal of the organic waste; and the oil-water separation device of the pretreatment apparatus separates the oil from the water to obtain the recycled oil and the recycled water.
(2) The shattering device of the pretreatment apparatus shatters the organic waste into slurry to minimize the organic waste and increase a total surface area for decomposition reactions to complete the work quickly, in 3 to 24 hours.
(3) Microbial enzymes and raw material are added into the slurry to make a mixture, and the mixture is decomposed and sterilized by the decomposition apparatus to form a recycled composting-free organic fertilizer product.
(4) The system conducts decomposition, absorption, poison removal, neutralization and nutrient adjustment simultaneously to increase the efficiency, minimize labor, reduce processing space, recycle oil, water, and residues respectively, and diminish waste water, odors and the propagation of bacteria and diseases.
(5) By the addition of different microbial enzymes and raw material, the organic waste becomes a unique composting-free organic fertilizer product, which can be used as a soil conditioner product, an animal feed, a feed additive, an organic fertilizer, or a bacterial raw material for composting, to recycle a whole resource of the organic waste, to enhance soil quality , improve the physical and chemical properties of the soil, transform a void nutrient into a valid one, and promote growth quality of crops.

It should be apparent to those skilled in the art that the above description is only illustrative of specific embodiments and examples of the invention. The invention should therefore cover various modifications and variations made to the herein-described structure and operations of the invention, provided they fall within the scope of the invention as defined in the following appended claims.

## Claims

1. A system for composting-free disposal of organic waste, comprising:
a heating apparatus;
a pretreatment apparatus, connected with the heating apparatus, and receiving the organic waste, the pretreatment apparatus further containing a shattering device, wherein the organic waste is shattered by the shattering device and heated by the heating apparatus to become a slurry;
a milling device, disposed downstream from the pretreatment apparatus, receiving the slurry from the pretreatment apparatus, and milling the slurry into a fine-slurry;
an open spare tank, disposed downstream from the milling device, receiving the fine-slurry from the milling device, and mixing the fine-slurry with microbial enzymes and raw material to become the mixture; and
a decomposition apparatus disposed downstream from the open spare tank, connected with the heating apparatus, and receiving the mixture from the open spare tank, wherein the mixture is heated by the heating apparatus, and decomposed and sterilized by the decomposition apparatus to make a composting-free organic fertilizer product.

2. The system as claimed in claim 1, wherein the pretreatment apparatus includes a storage tank and an oil-water separation device, the storage tank being disposed downstream from the shattering device, the oil-water separation device being disposed downstream from the storage tank, the organic waste being guided into the shattering device, and the shattering device shattering the organic waste to make an oil-slurry to be further guided into the storage tank, and the heating apparatus heating the oil-slurry in the storage tank to separate the oil-slurry into the slurry and a surface oil-water mixed liquid, the oil-water separation device including an oil collection pipeline and a water collection pipeline, and the water collection pipeline connecting to an upstream position of the storage tank.

3. The system as claimed in claim 2, wherein the open spare tank is disposed between the storage tank of the pretreatment apparatus and the decomposition apparatus, the storage tank conveying the slurry into the spare tank, the microbial enzymes and raw material being added into the spare tank to mix with the slurry to make the mixture, the spare tank having a diaphragmatic pump to convey the mixture into a decomposition tank of the decomposition apparatus, the decomposition tank having a stirring device therein, the decomposition apparatus having a feed valve and a regulating valve, the heating apparatus heating the mixture in the decomposing tank, the decomposition tank being a vacuum tank, the system further including a compression exhaust device, a heat exchanger, a water storage device, and a filter device, the compression exhaust device connecting to the decomposition tank of the decomposition apparatus to draw out vapor generated from the mixture, the heat exchanger connecting to the compression exhaust device in order to cool the vapor into liquid water which is to be further guided into the water storage device connecting with the heat exchanger, the filter device connecting to the water storage device to filter the liquid water to make drinking water, and the mixture being decomposed and dried to become a solid fertilized composting-free organic fertilizer product.

4. The system as claimed in claim 2, wherein the open spare tank is disposed between the storage tank of the pretreatment apparatus and the decomposition apparatus, the storage tank conveying the slurry into the spare tank, the microbial enzymes and raw material being added into the spare tank to mix with the slurry to form the mixture, the spare tank having a diaphragmatic pump to convey the mixture into a decomposition tank of the decomposition apparatus, the decomposition tank having a stirring device therein, the heating apparatus heating the mixture in the decomposing tank, the decomposition tank being a general tank, the system further including an exhaust fan device, the exhaust fan device connecting to the decomposition tank to draw out vapor generated from the mixture, and the mixture being decomposed and dried to become a solid fertilized composting-free organic fertilizer product.

5. A method for composting-free disposal of organic waste, comprising:
(a) shattering and minimizing the size of the organic waste to make a slurry;
(b) milling the slurry into a fine-slurry;
(c) adding microbial enzymes and raw material into the fine-slurry to make a mixture; and
(d) heating, decomposing and sterilizing the mixture to make an composting-free organic fertilizer product.

6. The method as claimed in claim 5, wherein prior to step (b), the method further comprises stirring and then separating oil from the slurry.

7. The method as claimed in claim 5 or 6, wherein the organic waste of step (a) is guided into a pretreatment apparatus to be shattered and heated by a heating apparatus to become the slurry, and the mixture of step (d) is guided into a decomposition apparatus and heated by the heating apparatus.

8. The method as claimed in claim 7, wherein the pretreatment apparatus includes a storage tank, a shattering device and an oil-water separation device, and the storage tank is placed downstream from the shattering device, the oil-water separation device is placed downstream from the storage tank, the organic waste being guided into the shattering device, the shattering device shattering the organic waste to make an oil-slurry to be further guided into the storage tank, the storage tank having a stirring device therein, the heating apparatus heating the oil-slurry in the storage tank to separate the oil-slurry into the slurry and a surface oil-water mixed liquid, the oil-water separation device including an oil collection pipeline and a water collection pipeline, and the water collection pipeline connecting to an upstream position of the storage tank.

9. The method as claimed in claim 8, wherein a milling device is disposed between the storage tank of the pretreatment apparatus and the decomposition apparatus, and an open spare tank is disposed between the milling device and the decomposition apparatus, the milling device mills the slurry into the fine-slurry, which is to be further conveyed into the spare tank, the microbial enzymes and raw material being added into the spare tank to mix with the fine-slurry to make the mixture, the spare tank having a diaphragmatic pump to convey the mixture into a decomposition tank of the decomposition apparatus, the decomposition tank having a stirring device therein, the decomposition apparatus having a feed valve and a regulating valve, the heating apparatus heating the mixture in the decomposing tank, the decomposition tank being an airtight high pressure reaction tank, and the mixture decomposes to become a liquid fertilized composting-free organic fertilizer product.

10. The method as claimed in claim 8, wherein an open spare tank is disposed between the storage tank of the pretreatment apparatus and the decomposition apparatus, the storage tank conveying the slurry into the spare tank, the microbial enzymes and raw material being added into the spare tank to mix with the slurry to make the mixture, the spare tank having a diaphragmatic pump to convey the mixture into a decomposition tank of the decomposition apparatus, the decomposition tank having a stirring device therein, the decomposition apparatus having a feed valve and a regulating valve, the heating apparatus heating the mixture in the decomposing tank, the decomposition tank being a vacuum tank, a compression exhaust device connecting to the decomposition tank of the decomposition apparatus to draw out vapor generated from the mixture, a heat exchanger connecting the compression exhaust device to cool the vapor into liquid water that is further guided into the water storage device connecting with the heat exchanger, a filter device connecting to the water storage device to filter the liquid water to become drinking water, and the mixture being decomposed and dried to become a solid fertilized composting-free organic fertilizer product.

11. The method as claimed in claim 8, wherein an open spare tank is disposed between the storage tank of the pretreatment apparatus and the decomposition apparatus, the storage tank conveying the slurry into the spare tank, the microbial enzymes and raw material being added into the spare tank to mix with the slurry to make the mixture, the spare tank having a diaphragmatic pump to convey the mixture into a decomposition tank of the decomposition apparatus, the decomposition tank having a stirring device therein, the heating apparatus heating the mixture in the decomposing tank, the decomposition tank being a general tank, the system further including an exhaust fan device connecting to the decomposition tank to draw out vapor generated from the mixture, which being decomposed and dried to become a solid fertilized composting-free organic fertilizer product.

## Patentansprüche

1. System für die kompostierungsfreie Entsorgung organischer Abfälle, umfassend:
eine Heizvorrichtung;
eine Vorbehandlungsvorrichtung, die mit der Heizvorrichtung verbunden ist und die organischen Abfälle in Empfang nimmt, wobei die Vorbehandlungsvorrichtung weiterhin eine Zertrümmerungsvorrichtung aufweist, wobei die organischen Abfälle von der Zertrümmerungsvorrichtung und von der Heizvorrichtung erwärmt werden, um zu einer Aufschlämmung zu werden;
eine Zerkleinerungsvorrichtung stromabwärts von der Vorbehandlungsvorrichtung, welche die Aufschlämmung von der Vorbehandlungsvorrichtung erhält und die Vorbehandlungsvorrichtung in eine Fein-Aufschlämmung zerkleinert;
einen offenen Reservetank stromabwärts von der Zerkleinerungsvorrichtung, welcher die Fein-Aufschlämmung von der Zerkleinerungsvorrichtung erhält und die Fein-Aufschlämmung mit mikrobiellen Enzymen und Rohmaterial zu einer Mischung vermischt; und
eine Zersetzungsvorrichtung stromabwärts von dem offenen Reservetank, die mit der Heizvorrichtung verbunden ist und die Mischung von dem offenen Reservetank erhält, wobei die Mischung durch die Heizvorrichtung erwärmt wird und von der Zersetzungsvorrichtung zersetzt und sterilisiert wird, um ein kompostierungsfreies organisches Düngemittelprodukt herzustellen.

2. System nach Anspruch 1, wobei die Vorbehandlungsvorrichtung einen Vorratsbehälter und eine Öl-Wasser-Trennvorrichtung aufweist, wobei der Vorratsbehälter stromabwärts von der Zertrümmerungsvorrichtung angeordnet ist, wobei die Öl-Wasser-Trennvorrrichtung stromabwärts von dem Vorratsbehälter angeordnet ist, der organische Abfall in die Zertrümmerungsvorrichtung geführt wird, und die Zertrümmerungsvorrichtung den organischen Abfall in eine Öl-Aufschlämmung zertrümmert, die weiter in den Vorratsbehälter geführt wird, und wobei die Heizvorrichtung die Öl-Aufschlämmung in dem Vorratsbehälter erwärmt, die Öl-Aufschlämmung in die Aufschlämmung und eine Oberflächen-Öl-Wasser-Mischflüssigkeit zu trennen, wobei die Öl-Wasser-Trennvorrichtung eine Öl-Sammelleitung und eine Wasser-Sammelleitung aufweist und die Wasser-Sammelleitung mit einer stromaufwärtigen Position des Vorratsbehälters verbindet.

3. System nach Anspruch 2, wobei der offene Reservetank zwischen dem Vorratsbehälter der Vorbehandlungsvorrichtung und der Zersetzungsvorrichtung angeordnet ist, der Vorratsbehälter die Aufschlämmung in den Reservetank fördert, die mikrobiellen Enzyme und das Rohmaterial in den Reservetank zugegeben werden, um mit der Aufschlämmung zu einer Mischung gemischt zu werden, wobei der Reservetank eine Membranpumpe aufweist, um die Mischung zu einem Zersetzungs- bzw. Faulbehälter der Zersetzungsvorrichtung zu fördern, der Zersetzungsbehälter ein Rührwerk darin aufweist, die Zersetzungsvorrichtung ein Zulaufventil und ein Regelventil aufweist, die Heizvorrichtung die Mischung in dem Zersetzungsbehälter erwärmt, der Zersetzungsbehälter ein luftdichter Behälter ist, wobei das System weiterhin ein Druck-Ablassventil, einen Wärmetauscher, eine Wasserspeichervorrichtung und eine Filtervorrichtung aufweist, wobei das Druck-Ablassventil mit dem Zersetzungsbehälter der Zersetzungsvorrichtung verbindet, um Dampf, der erzeugt wird, aus der Mischung abzusaugen, wobei der Wärmetauscher mit dem Druck-Ablassventil verbindet, um den Dampf in flüssiges Wasser abzukühlen, das weiter in die Wasserspeichervorrichtung geführt wird, die mit dem Wärmetauscher verbindet, wobei die Filtervorrichtung mit der Wasserspeichervorrichtung verbindet, um das flüssige Wasser zu filtern, um Trinkwasser zu gewinnen, und wobei die Mischung zersetzt und getrocknet wird, um zu einem getrockneten kompostierungsfreien organischen Düngemittelprodukt zu werden.

4. System nach Anspruch 2, wobei der offene Reservetank zwischen dem Vorratsbehälter der Vorbehandlungsvorrichtung und der Zersetzungsvorrichtung angeordnet ist, der Vorratsbehälter die Aufschlämmung in den Reservetank fördert, die mikrobiellen Enzyme und Rohmaterial in den Reservetank hinzugefügt werden, um mit der Aufschlämmung zu der Mischung vermischt zu werden, der Reservetank eine Membranpumpe aufweist, um die Mischung in einen Zersetzungs- bzw. Faulbehälter der Zersetzungsvorrichtung zu fördern, der Zersetzungsbehälter ein Rührwerk darin aufweist, die Heizvorrichtung die Mischung in dem Zersetzungsbehälter erwärmt, der Zersetzungsbehälter, ein allgemeiner Tank ist, wobei das System ferner eine Abluftventilatorvorrichtung aufweist, wobei die Abluftventilatorvorrichtung mit dem zersetzungsbehälter verbindet, um Dampf, der erzeugt wird, aus der Mischung abzusaugen, und wobei die Mischung zersetzt und getrocknet wird, um ein festes kompostierungsfreies organischen Düngernittelprodukt zu werden.

5. Verfahren zur kompostierungsfreien Entsorgung organischer Abfälle, mit den Schritten:
(a) Zertrümmem bzw. Zerkleinern und Minimieren der Größe des organischen Abfalls, um eine Aufschlämmung herzustellen;
(b) Zerkleinern der Aufschlämmung zu einer Fein-Aufschlammung;
(c) Zugabe von mikrobiellen Enzymen und Rohmaterial in die Fein-Aufschlämmung, um eine Mischung herzustellen; und
(d) Erwärmen, Zersetzen und Sterilisieren der Mischung, um ein kompostierungsfreies organisches Düngemittelprodukt herzustellen.

6. Verfahren nach Anspruch 5, wobei das Verfahren vor dem Schritt (b) weiterhin ein Rühren und anschließendes Trennen von Öl von der Aufschlämmung aufweist.

7. Verfahren nach Anspruch 5 oder 6, wobei die organischen Abfälle aus Schritt (a) in eine Vorbehandlungsvorrichtung geführt werden, um zertümmert und von einer Heizvorrichtung erwärmt zu werden, um zu der Aufschlämmung zu werden, und wobei die Mischung von Schritt (d) in eine Zersetzungsvorrichtung geführt und durch die Heizvorrichtung erhitzt wird.

8. Verfahren nach Anspruch 7, wobei die Vorbehandlungsvorrichtung, einen Vorratsbehälter, eine Zertrümmerungs- bzw. Zerkleingerungsvorrichtung und eine Öl-Wasser-Trennvorrichtung aufweist, und wobei der Vorratsbehälter stromabwärts von der Zertrümmerungsvorrichtung angeordnet ist, die Öl-Wasser-Trennvorrichtung stromabwärts von dem Vorratsbehälter angeordnet ist, der organische Abfall in die Zertrümmerungsvorrichtung geführt wird, die Zertrümmerungsvorrichtung den organischen Abfall in eine Öl-Aufschlämmung zertrümmert, die weiter in den Vorratsbehälter geführt wird, der Vorratsbehälter darin ein Rührwerk aufweist, die Heizvorrichtung die Öl-Aufschlämmung in dem Vorratsbehälter erwärmt, um die Öl-Aufschlämmung in die Aufschlämmung und eine Oberflächen-Öl-Wasser-Mischflüssigkeit zu trennen, wobei die Öl-Wasser-Trennvorrichtung eine Öl-Sammelleitung und eine Wasser-Sammelleitung aufweist und die Wasser-Sammelleitung mit einer stromaufwärtigen Position des Vorratsbehälters verbindet.

9. Verfahren nach Anspruch 8, wobei ein Rührwerk zwischen dem Vorratsbehälter der Vorbehandlungsvorrichtung und der Zersetzungsvorrichtung angeordnet ist, und wobei ein offener Reservetank zwischen der Zerkleinerungsvorrichtung und der Zersetzungsvorrichtung angeordnet ist, wobei die Zerkleinerungsvorrichtung die Aufschlämmung in eine Fein-Aufschlämmung zerkleinert, die weiter in den offenen Reservetank geführt wird, wobei die mikrobiellen Enzyme und Rohmaterial in den Reservetank hinzugefügt werden, um mit der Fein-Aufschlämmung zu der Mischung vermischt zu werden, wobei der Reservetank eine Membranpumpe aufweist, um die Mischung in einen Zersetzungs- bzw. Faulbehälter der Zersetzungsvorrichtung zu fördern, der Zersetzungsbehälter ein Rührwerk darin aufweist, die Zersetzungsvorrichtung ein Zulaufventil und ein Regelventil aufweist, die Heizvorrichtung die Mischung in dem Zersetzungsbehälter erwärmt, der Zersetzungsbehälter ein luftdichter Behälter ist und die Mischung zersetzt, sodass diese zu einem flüssigen kompostierungsfreien organischen Düngemittelprodukt wird.

10. Verfahren nach Anspruch 8, wobei der offene Reservetank zwischen dem Vorratsbehälter der Vorbehandlungsvorrichtung und der Zersetzungsvorrichtung angeordnet ist, der Vorratsbehälter die Aufschlämmung in den Reservetank fördert, die mikrobiellen Enzyme und Rohmaterial in den Reservetank hinzugefügt werden, um mit der Aufschlämmung zu der Mischung vermischt zu werden, der Reservetank eine Membranpumpe aufweist, um die Mischung in einen Zersetzungs- bzw. Faulbehälter der Zersetzungsvorrichtung zu fördern, der Zersetzungsbehälter ein Rührwerk darin aufweist, die Heizvorrichtung die Mischung in dem Zersetzungsbehälter erwärmt, der Zersetzungsbehälter, ein luftdichter Behälter ist, eine Kompressions-Abluftvorrichtung mit dem Zersetzungsbehälter der Zersetzungsvorrichtung verbindet, um Dampf, der erzeugt wird, abzusaugen, ein Wärmetauscher die Kompressions-Abluflvorrichtung verbindet, um den Dampf in flüssiges Wasser abzukühlen, das weiter in die Wasserspeichervorrichtung geführt wird, die mit dem Wärmetauscher verbindet, wobei eine Filtervorrichtung mit der Wasserspeichervorrichtung verbindet, um das flüssige Wasser zu flltern, um Trinkwasser zu gewinnen, und wobei die Mischung zersetzt und getrocknet wird, um zu einem getrockneten kompostierungsfreien organischen Düngemittelprodukt zu werden.

11. Verfahren nach Anspruch 8, wobei ein offener Reservetank zwischen dem Vorratsbehälter der Vorbehandlungsvorrichtung und der Zersetzungsvorrichtung angeordnet ist, der Vorratsbehälter die Aufschlämmung in den Reservetank fördert, die mikrobiellen Enzyme und Rohmaterial in den Reservetank hinzugefügt werden, um mit der Aufschlämmung zu der Mischung vermischt zu werden, der Reservetank eine Membranpumpe aufweist, um die Mischung in einen Zersetzungs- bzw. Faulbehälter der Zersetzungsvorrichtung zu fördern, der Zersetzungsbehälter ein Rührwerk darin aufweist, die Heizvorrichtung die Mischung in dem Zersetzungsbehälter erwärmt, der Zersetzungsbehälter, ein allgemeiner Tank ist, wobei das System ferner eine Abluftventilatorvorrichtung aufweist, die mit dem Zersetzungsbehälter verbindet, um Dampf, der erzeugt wird, aus der Mischung abzusaugen, und wobei die Mischung zersetzt und getrocknet wird, um ein festes kompostierungsfreies organischen Düngemittelprodukt zu werden.

## Revendications

1. Un système pour l'élimination sans compostage de déchets organiques, comprenant:
un appareil de chauffage;
un appareil de pré-traitement, connecté à l'appareil de chauffage, et recevant le déchet organique, l'appareil de pré-traitement comprenant en outre un dispositif de déchiquetage, dans lequel le déchet organique est déchiqueté par le dispositif de déchiquetage et chauffé par l'appareil de chauffage pour devenir une boue;
un dispositif de broyage, disposé en aval de l'appareil de pré-traitement, recevant la boue de l'appareil de pré-traitement, et broyant la boue en une boue fine;
un réservoir de réserve ouvert, disposé en aval du dispositif de broyage, recevant la boue fine du dispositif de broyage et mélangeant la boue fine avec des enzymes microbiennes et de la matière première pour donner un mélange; et
un appareil de décomposition disposé en aval du réservoir de réserve ouvert, connecté à l'appareil de chauffage, et recevant le mélange du réservoir de réserve ouvert, dans lequel le mélange est chauffé par l'appareil de chauffage, et décomposé et stérilisé par l'appareil de décomposition pour la fabrication sans compostage d'un produit fertilisant organique.

2. Le système tel que revendiqué dans la revendication 1, dans lequel l'appareil de pré-traitement comporte un réservoir de stockage et un dispositif de séparation d'huile et d'eau, le réservoir de stockage étant disposé en aval du dispositif de déchiquetage, le dispositif de séparation de l'huile et de l'eau étant disposé en aval du réservoir de stockage, le déchet organique étant guidé à l'intérieur du dispositif de déchiquetage, et le dispositif de déchiquetage déchiquetant le déchet organique pour produire une boue huilée devant être en outre guidé dans le réservoir de stockage, et l'appareil de chauffage chauffant la boue huilée dans le réservoir de stockage afin de séparer la boue huilée en une boue et un liquide de mélange huile-eau de surface, le dispositif de séparation de l'huile et de l'eau comportant une conduite de collecte d'huile et une conduite de collecte d'eau, et la conduite de collecte d'eau se raccordant à une position en amont du réservoir de stockage.

3. Le système tel que revendiqué dans la revendication 1, dans lequel le réservoir de réserve ouvert est disposé entre le réservoir de stockage de l'appareil de pré-traitement et l'appareil de décomposition, le réservoir de stockage véhiculant la boue dans le réservoir de réserve, les enzymes microbiennes et la matière première étant ajoutées au réservoir de réserve pour se mélanger à la boue pour former le mélange, le réservoir de réserve ayant une pompe diaphragmatique pour véhiculer le mélange dans un réservoir de décomposition de l'appareil de décomposition, le réservoir de décomposition ayant un dispositif de malaxage en son sein, l'appareil de décomposition ayant une valve d'alimentation et une valve de régulation, l'appareil de chauffage chauffant le mélange dans le réservoir de décomposition, le réservoir de décomposition étant un réservoir à vide, le système comprenant en outre un dispositif d'échappement de compression, un échangeur de chaleur, un dispositif de stockage d'eau, et un dispositif de filtration, le dispositif d'échappement de compression se raccordant au réservoir de décomposition de l'appareil de décomposition afin de tirer la vapeur générée par le mélange, l'échangeur de chaleur se raccordant au dispositif d'échappement de compression afin de refroidir et liquéfier la vapeur d'eau, laquelle est ensuite guidée vers le dispositif de stockage d'eau se raccordant à l'échangeur de chaleur, le dispositif de filtration se raccordant au dispositif de stockage d'eau pour filtrer l'eau liquide pour produire de l'eau potable, et le mélange étant décomposé et séché pour devenir un puissant produit fertilisant organique exempt de compostage.

4. Le système tel que revendiqué dans la revendication 2, dans lequel le réservoir de réserve ouvert est disposé entre le réservoir de stockage de l'appareil de pré-traitement et l'appareil de décomposition, le dispositif de stockage amenant la boue à l'intérieur du réservoir de réserve, les enzymes microbiennes et la matière première étant ajoutées dans le réservoir de réserve afin de se mélanger à la boue pour former un mélange, le réservoir de réserve ayant une pompe diaphragmatique pour amener le mélange au sein d'un réservoir de décomposition de l'appareil de décomposition, le réservoir de décomposition ayant un dispositif de malaxage en son sein, l'appareil de chauffage chauffant le mélange au sein du réservoir de décomposition, le réservoir de décomposition étant un réservoir général, le système comportant en outre un dispositif de ventilation d'échappement, le dispositif de ventilation d'échappement se raccordant au réservoir de décomposition afin de tirer la vapeur générée par le mélange, et le mélange étant décomposé et séché pour devenir un puissant produit fertilisant organique sans compostage.

5. Une méthode d'élimination sans compostage d'un déchant organique, comportant:
(a) le déchiquetage et la réduction de volume du déchet organique dans le but de réaliser une boue;
(b) broyer la boue pour réaliser une boue fine;
(c) ajouter des enzymes microbiennes et de la matière première à la boue fine afin de réaliser un mélange.

6. La méthode telle que revendiquée dans la revendication 5, dans laquelle , avant l'étape (b), la méthode comporte le malaxage puis la séparation de l'huile contenue dans la boue.

7. La méthode telle que revendiquée dans la revendication 5 ou 6, dans laquelle le déchet organique de l'étape (a) est amené au sein d'un appareil de pré-traitement pour y être déchiqueté et chauffé par un appareil de chauffage afin de produire la boue, et le mélange de l'étape (d) étant amené à l'intérieur de l'appareil de décompostion et chauffé par l'appareil de chauffage.

8. La méthode telle que revendiquée dans la revendication 7, dans laquelle l'appareil de pré-traitement comporte un réservoir de stockage, un dispositif de déchiquetage et un dispositif de séparation d'huile et d'eau, et le réservoir de stockage est disposé en aval du dispositif de déchiquetage, le dispositif de séparation d'huile et d'eau étant disposé en aval du réservoir de stockage, le déchet organique étant guidé au sein du dispositif de déchiquetage, le dispositif de déchiquetage déchiquetant le déchet organique pour produire une boue huilée devant être ensuite amenée à l'intérieur du réservoir de stockage, le réservoir de stockage ayant en son sein un dispositif de malaxage, l'appareil de chauffage chauffant la boue huilée à l'intérieur du réservoir de stockage pour séparer la boue huilée en une boue et un liquide de mélange de surface eau-huile, le dispositif de séparation de l'huile et de l'eau comportant une conduite de collecte d'huile et une conduite de collecte d'eau, et la conduite de collecte d'eau se raccordant en une position amont au réservoir de stockage.

9. La méthode telle que revendiquée dans la revendication 8, dans laquelle un dispositif de broyage est disposé entre le réservoir de stockage et l'appareil de pré-traitement et l'appareil de décomposition, et un réservoir de réserve ouvert est disposé entre le dispositif de broyage et l'appareil de décomposition, le dispositif de broyage broyant la boue en une boue fine, laquelle est ensuite amenée à l'intérieur du réservoir de réserve, les enzymes microbiennes et la matière première étant ajoutée à l'intérieur du réservoir de réserver pour se mélanger à la boue fine pour former le mélange, le réservoir de réserve ayant une pompe diaphragmatique pour amener le mélange à l'intérieur du réservoir de décomposition de l'appareil de décomposition, le réservoir de décomposition ayant un dispositif de malaxage en son sein, l'appareil de décomposition ayant une valve d'alimentation et une valve de régulation, l'appareil de chauffage chauffant le mélange au sein du réservoir de décomposition, le réservoir de décomposition étant un réservoir à réaction à haute pression étanche, et le mélange se décomposant pour former un produit liquide fertilisant organique sans compostage.

10. La méthode telle que revendiquée dans la revendication 8, dans laquelle le réservoir de réserve ouvert est disposé entre le réservoir de stockage de l'appareil de pré-traitement et l'appareil de décomposition, le réservoir de stockage amenant la boue à l'intérieur du réservoir de réserve, les enzymes microbienne et la matière première étant ajoutée à l'intérieur du réservoir de réserve pour former le mélange, le réservoir de réserve ayant une pompe diaphragmatique pour amener le mélange à l'intérieur du réservoir de décomposition de l'appareil de décomposition, le réservoir de décomposition ayant un dispositif de malaxage en son sein, l'appareil de décomposition ayant une valve d'alimentation et une valve de régulation, l'appareil de chauffage chauffant le mélange à l'intérieur du réservoir de décomposition, le réservoir de décomposition étant un réservoir à vide, un dispositif d'échappement à compression se raccordant au réservoir de décomposition de l'appareil de décomposition pour extraire la vapeur générée depuis le mélange, un échangeur de chaleur se raccordant au dispositif d'échappement et de compression pour refroidir et liquéfier la vapeur en eau qui est ensuite amenée au dispositif de stockage d'eau se raccordant à l'échangeur de chaleur, un dispositif de filtrage se raccordant au dispositif de stockage d'eau pour filtrer l'eau liquide afin d'en faire de l'eau potable, et le mélange étant décomposé et séché pour produire un puissant produit fertilisant organique sans compostage.

11. La méthode telle que revendiquée dans la revendication 8, dans laquelle un réservoir de réserve ouvert est disposé entre le réservoir de stockage de l'appareil de pré-traitement et l'appareil de décomposition, le réservoir de stockage amenant la boue à l'intérieur du réservoir de réserve, les enzymes microbiennes et la matière première étant ajoutée à au réservoir de réserve pour se mélange à la boue et former le mélange, le réservoir de réserve ayant une pompe diaphragmatique pour amener le mélange à l'intérieur d'un réservoir de décomposition de l'appareil de décomposition, le réservoir de décomposition ayant un dispositif de malaxage en son sein, l'appareil de chauffage chauffant le mélange à l'intérieur du réservoir de décomposition, le réservoir de décomposition étant un réservoir général, le système comprenant en outre un dispositif de ventilation des échappements se raccordant au réservoir de décomposition pour extraire la vapeur d'eau générée au sein du mélange, lequel, étant décomposé et séché devient un puissant produit fertilisant organique sans compostage.
